# EUROPEAN PATENT APPLICATION

(11) **EP 2 244 223 A1**
(43) Date of publication of application: **27.10.2010**
(21) Application number: 10160810.7
(22) Date of filing: 23.04.2010
(51) Int. Cl.: G06Q 99/00

(54) **Dynamic sustainability factor management**

(30) Priority: 24.04.2009 US 429817
(71) Applicant: Rockwell Automation Technologies, Inc., Mayfield Heights, OH 44124 (US)
(72) Inventor: Walker, Marcia Elaine, Durham, NC 27713 (US); Kaufman, Philip John, Milwaukee, WI 53207-4089 (US)
(74) Representative: Grünecker, Kinkeldey, Stockmair & Schwanhäusser Anwaltssozietät

(57) **Abstract**

A dynamic sustainability factor management system that can facilitate scoring of sustainability factors associated with an industrial environment is provided. Particularly, the system can evaluate factors related to the 'planet,' 'people,' and 'profits' to establish a sustainability rating. This rating can be generated and applied in most any level of granularity as desired. Additionally, weighting factors can be individually applied to sustainability factors in computation of the sustainability score. These weighting factors facilitate individualization or personalization in calculation of a score.

## Description

### BACKGROUND

The current economic climate and governmental pressures to reduce energy demands and greenhouse gas emission will force manufacturers to explore energy reductions on the plant floor. Accordingly, sustainability factors have become of interest for many. Conventionally, basic monitoring of energy is performed only at the facility level. Understanding energy usage patterns is accomplished by manually reviewing the logged data for obvious discrepancies or trends in consumption. These manual analysis processes are extremely labor intensive and require human approximations and interpolations. Accordingly, accuracy is not easily achieved, if at all. Rather, these calculations and approximations are prone to error and thus, oftentimes meaningless data.

The current demand management systems are nothing more than infrastructure maximum capacity load shedding applications. Newer systems may include the ability to transfer to on-site generation with auxiliary diesel or natural gas generators. Essentially, the facility level tracking of energy makes true demand management decisions impossible in today's industrial environment. Similarly, the ability to establish accurate, and granular, sustainability factors is also not possible in conventional systems.

### SUMMARY

The following presents a simplified summary of the specification in order to provide a basic understanding of some aspects of the specification. This summary is not an extensive overview of the functionality. It is not intended to identify key/critical elements of the specification or to delineate the scope. Its sole purpose is to present some concepts of the specification in a simplified form as a prelude to the more detailed description that is presented later.

A dynamic sustainability factor management system is provided that can facilitate scoring of sustainability factors associated with an industrial environment. In some aspects, factors related to the 'planet,' 'people,' and 'profits' can be employed to establish the sustainability rating. This rating can be generated and applied in most any level of granularity as desired. Essentially, the sustainability score (as described herein) can represent factors associated with products or production of an industrial environment.

In other aspects, sustainability factors can be weighted as appropriate, preferred or desired. For example, weighting factors can be individually applied to sustainability factors in computation of the sustainability score. These weighting factors facilitate individualization or personalization in calculation of a score.

In various aspects, a calculation component can establish an individual value, a combinatorial value, a multi-factorial value, or, optionally, a weighted value. In operation, the sustainability score (*e*.*g*., individual, combinatorial, multi-factorial or weighted) could be used for decision making related to, for example, supply chain management (*e*.*g*., raw material to finished good to 'reverse supply chain'), industrial production, consumer purchasing, or regulatory oversight.

To the accomplishment of the foregoing and related ends, certain illustrative aspects of the specification are described herein in connection with the following description and the annexed drawings. These aspects are indicative, however, of but a few of the various ways in which the principles of the functionality can be employed and the subject specification is intended to include all such aspects and their equivalents. Other advantages and novel features of the specification will become apparent from the following detailed description when considered in conjunction with the drawings.

### BRIEF DESCRIPTION OF THE DRAWINGS

FIG. 1 illustrates an example block diagram of a system that facilitates generation of a dynamic sustainability score in accordance with aspects of the innovation.

FIG. 2 illustrates an example block diagram of a factor management system in accordance with embodiments.

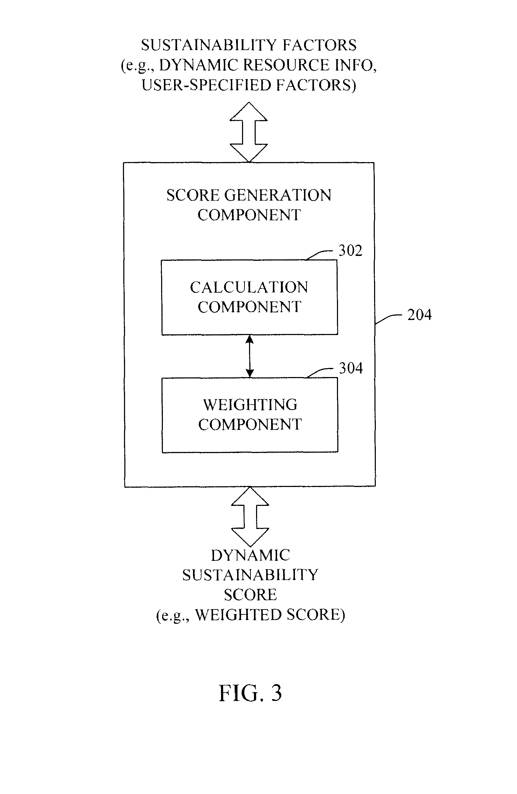

FIG. 3 illustrates an example score generation component in accordance with embodiments.

FIG. 4 illustrates an example cumulative sustainability impact in accordance with aspects of the innovation.

FIG. 5 illustrates an example block diagram of a system that facilitates collection of resource data related to granular processes within an industrial environment.

FIG. 6 illustrates example illustrations of tagged resource data elements in accordance with aspects of the specification.

FIG. 7 illustrates an alternative example block diagram of a system that facilitates collection of resource data related to granular processes within an industrial environment.

FIG. 8 illustrates an example block diagram of a data management component in accordance with aspects of the specification.

FIG. 9 illustrates an example flow chart of procedures that facilitate collection, tagging and storage of resource data in accordance with aspects of the specification.

FIG. 10 illustrates an example flow diagram of procedures that facilitate collection of resource data in accordance with aspects of the specification.

FIG. 11 illustrates an example flow diagram of procedures that facilitate collection of process data in accordance with aspects of the specification.

FIG. 12 illustrates an example flow diagram of procedures that facilitate marking of resource data in accordance with aspects of the specification.

FIG. 13 illustrates an alternative example block diagram of a system that facilitates collection of resource data related to granular processes within an industrial environment.

FIG. 14 illustrates an example data management component in accordance with aspects of the specification.

### DETAILED DESCRIPTION

The functionality is now described with reference to the drawings, wherein like reference numerals are used to refer to like elements throughout. In the following description, for purposes of explanation, numerous specific details are set forth in order to provide a thorough understanding of the subject specification. It may be evident, however, that the functionality can be practiced without these specific details. In other instances, well-known structures and devices are shown in block diagram form in order to facilitate describing the functionality.

As used in this application, the terms "component" and "system" are intended to refer to a computer-related entity, either hardware, a combination of hardware and software, software, or software in execution. For example, a component can be, but is not limited to being, a process running on a processor, a processor, an object, an executable, a thread of execution, a program, and/or a computer. By way of illustration, both an application running on a server and the server can be a component. One or more components can reside within a process and/or thread of execution, and a component can be localized on one computer and/or distributed between two or more computers.

As used herein, the term to "infer" or "inference" refer generally to the process of reasoning about or inferring states of the system, environment, and/or user from a set of observations as captured *via* events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

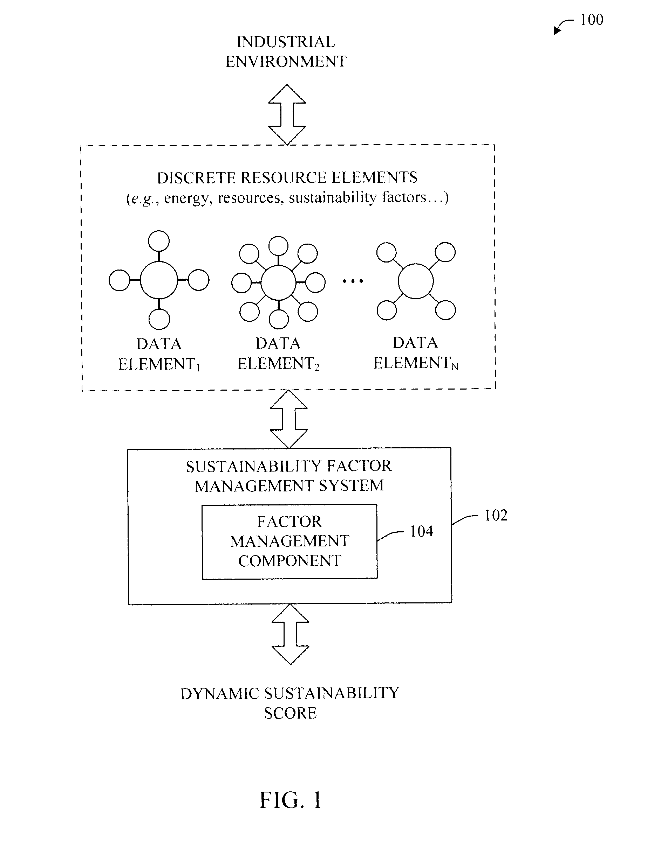

Referring now to the drawings, FIG. 1 illustrates a system 100 that facilitates dynamic sustainability factor scoring in accordance with aspects of the innovation. In particular, the subject innovation is directed to systems (and corresponding methodologies) that facilitate dynamic use of sustainability factors in industrial environments to establish a score or rating that can be used, for example by organizations (*e*.*g*., enhance process efficiency) and customers (*e*.*g*., purchasing decisions), to evaluate, enhance or manage production and products. The innovation, as disclosed and claimed herein provides mechanisms by which sustainability factors can be measured, scored and optionally weighted for use in comprehensive planning, purchasing, forecasting, etc. As will be described below, in particular aspects, factors such as water, air, gas, electricity and steam (WAGES) can be dynamically captured in a granular manner and used to establish a sustainability score.

While specific examples of the use of WAGES information are described below, it is to be understood that most any factor, criteria, metric or parameter can be used in establishing a sustainability score or rating in accordance with the innovation. As will be described, factors associated with "planet," "people," and "profit" (among others) can be employed in accordance with the features, functions and benefits disclosed and claimed herein.

In specific embodiments, these scored (and/or weighted factors) can be used in supply chain management, for example, spanning from raw materials to finished goods/products. Industrial production can also be enhanced, or otherwise optimized as a function of scores and/or weights of sustainability factors. Other uses include, but are not limited to, consumer purchasing decisions, regulatory oversight, product design, or the like. It is to be understood that, by quantifying sustainability factors within an industrial environment, individuals (and organizations) can make more informed decisions related to manufacture, procurement, work force, suppliers, *etc*.

Essentially, the system 100 can enhance management of both supply chain and production operations by using sustainability factors to enhance or otherwise optimize sustainability of a product and/or process. In operation, sustainability factors can be used to extend a) the specification of materials and products, b) the work instructions used to transform products into finished materials, c) descriptors and other factors associated with the human resources performing production, d) factors associated with machines performing production, e) factors associated with the facility and utilities supply chain involved in production, such as type of electricity used (*e*.*g*., solar vs. wind vs. coal), among others. Essentially, manufacturers could optimize their operations to minimize their overall energy, environmental, and negative human/community impact, from raw material to finished goods, while maintaining quality, regulatory compliance, and customer satisfaction.

As illustrated in FIG. 1, system 100 employs a sustainability factor management system 102 capable of transforming discrete resource elements along with other sustainability information into comprehensive product/process data, a dynamic sustainability score. As described above, the comprehensive product-process data can be represented by a score to assist decisions and analysis based upon the data. As used herein, a 'score' is intended to refer to most any rating, ranking, ordering or other quantification of data. Additionally, the management system 102 facilitates an optional weighting which effects personalization of scores. This weighting concept will be better understood upon a review of the figures that follow.

The sustainability factor management system 102 employs a factor management component 104 to quantify sustainability factors in accordance with aspects. For instance, as shown, the factor management component 104 can collect, gather, aggregate or otherwise obtain tagged data elements associated with an industrial environment. The concept of tagging resource data elements is described in detail *infra*. By way of illustration and not limitation, the tagged data elements can include most any data and information gathered from an industrial environment. Additionally, it is to be understood that the sustainability factor management system can also employ other information gathered with reference to an industrial environment (*e*.*g*., planet, people and profit factors).

For example, information related to resource consumption, usage, emissions and effluents can be captured as related to production or processes within an industrial environment. This information can be captured in real-time (or near real-time) or periodically as desired. The tags can include most any information that describes or contextualizes the raw resource data (*e*.*g*., consumption/usage in view of production). In one example, tags can include environmental factors captured simultaneously with resource data as well as an amount of product produced. It will be appreciated upon a review of the disclosure below that the tagged data elements can also include factors related to labor personnel, diversity, recycling procedure, *etc*. Essentially, as shown, this information can be scored and weighted to aid one to make comprehensive and/or intelligent product and/or process decisions.

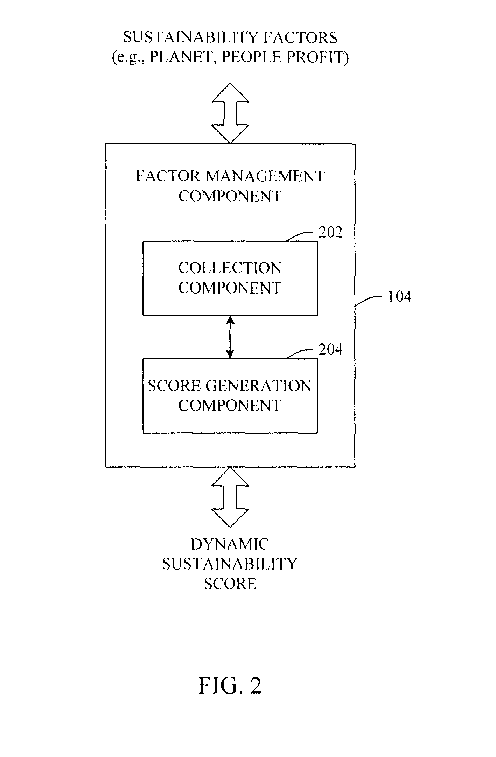

FIG. 2 illustrates an example block diagram of a factor management component 104 in accordance with aspects of the disclosure. Generally, the factor management component 104 can include a collection component 202 and a score generation component 204. Together, the collection component 202 and the score generation component 204 enable extension of current product and production specification parameters to include sustainability factors.

As will be understood, each step of a supply chain in an industrial environment involves material. When used in manufacturing or business, each material typically has a specification. This specification is most often a written statement of an item's required characteristics, documented in a manner that facilitates its procurement, production and/or acceptance. These characteristics are typically divided into three categories: (1) physical, (2) functional, and (3) operational. The specification describes the criteria to which the material must conform in terms of quality, design, compatibility, performance, price, *etc*.

By way of overview, at the beginning of the supply chain, there is 'raw material.' An example is butter or eggs. Multiple raw materials converge within the production process to become 'intramaterials' - mixtures of raw material that are not yet, in and of themselves, finished goods, but that, because of the production process, no longer meet the specification of the ingoing raw materials. An example of 'intramaterials' would be a mixture of butter and eggs - this mixture is a unique entity which has characteristics quite different from the ingoing material (*e*.*g*., butter or eggs).

Often these intramaterials also have a specification to which they must conform. Once they conform, they can move to the next step in the production process. A combination of raw materials and or intramaterials is eventually transformed into the finished good, which also has a specification. For example, the finished good might be a packaged chocolate chip cookie. Here, the raw materials would be butter, eggs, sugar, flour, salt, and chocolate chips as well as the packaging material. The intramaterials might include: butter+eggs, butter mixture+sugar, flour+salt, sugar mixture+flour mixture, all mixtures-+chocolate chips, and the baked cookie. Finally, the finished good might be the baked, packaged cookie.

Typically, specifications describe the color, weight, potency, size, odor, or similar physical characteristics of the products in each stage of the production process. The product information, including how much of which product to use, is contained on a document commonly referred to as a "Bill of Materials" or BOM.

Similarly, work instructions are written to describe precisely how to transform the material and with which type of machinery to use. In the example above the work instructions might be: 1) beat butter + eggs for 5 minutes using stand mixer #1,2) bake for 15 minutes at 350 degrees in oven #3. These work instructions are variously described as routings, standard operating procedures, workflow, *etc*. Together, the combination of the BOM and work instructions creates the "recipe," also known by other names such as a production procedure.

In an automated factory, recipes can exist both in the automation layer, which typically controls machinery and other automated equipment, and the MES (manufacturing execution systems) layer, which typically contains instructions that involve human interaction and manual instructions as well. Increasingly, these two layers also interact with a higher, ERP (enterprise resource planning) layer to connect to business-level systems.

Some recipes, especially in regulated environments such as life sciences or food operations, also outline the necessary skills and training of the human resources interacting with the production process. These skill sets can be managed and tracked *via* manual or automated means. When automated, the automated system will preclude operations from being performed by an unqualified person, thus leading to enhanced protections for quality and safety.

Similarly, some recipes outline the required parameters of the machine being used for production. Often a machine is 'qualified' or 'validated', or proven to operate according to certain standards. This qualification is maintained through testing, calibration and maintenance schedules. When performance is automated, the automation system will preclude operations from being conducted on an unqualified machine, thus leading to enhanced protections for quality and safety.

The innovation as described and claimed herein, factor a sustainability score into the aforementioned production practices. Following is a discussion of potential sustainability factors in accordance with aspects of the innovation. Though a great deal of attention has focused upon the value of sustainability, including environmental, energy, and safety factors, often the factors that impact sustainability can be viewed as external to the products and/or processes themselves. By integrating these factors into the full supply chain, a life-cycle view of the impact of the product can be achieved. It is to be understood that sustainability factors can be associated with the product, the process, or a combination of product and process.

The sustainability factors can be used to extend a) the specification of materials and products, b) the work instructions used to transform the products into finished material, c) descriptors and other factors associated with the human resources performing production, d) factors associated with the machines performing production, e) factors associated with the facility and utilities supply chain involved in production, such as type of electricity used (*e*.*g*., solar vs. wind vs. coal), and f) scheduling information.

Sustainability factors could be created using known industry standards, or, individuals could develop their own factors in order to track and measure those characteristics that are of particular importance to them. A table that describes sample sustainability factors is shown below. However, as a sustainability factor could be self-created to account for factors unique in importance to an individual, company, retailer, region, *etc*., it is to be understood that this table is not an all-inclusive list. Rather, other examples exist which are to be included within the scope of this disclosure and claims appended hereto.

| Sample Sustainability Factors grouped by "Triple Bottom Line" | | |
|---|---|---|
| Planet | People | Profit |
| • Water usage | • Diversity factors (employment of minorities *etc*.) for the employer | • Utilities costs, including demand charges |
| • Expected lifetime energy use of the product | • "Training" score - skilled vs. unskilled labor | • Marketing/end user appeal (*e*.*g*., package design A tested better than package design B and is expected to be more profitable) |
| • Expected energy use of the process | • Use of union vs. non- union labor | • Any financial measurement impacting the cost or profitability of a product |
| • Type of energy used for manufacturing (solar, wind, nuclear, *etc*) | • Fair labor practices | |
| • Carbon emissions | • LWDCR: Lost Work Day Case Rate (Work related injuries and illnesses that result in the employee not being able to perform work; cases per 100 employees) | |
| • "Recyclability", *e*.*g*., of packaging | • LWDR: Lost Work Day Rate (Measure of severity by accounting | |
| • "Waste" factor (for product and process) | | |
| • Any other factor which relates to the environmental impact of a product or process | | |
| | for the number of days lost due to work related injuries and illnesses; cases per 100 employees) | |
| | • RCR: Recordable Case Rate (Recordable cases includes any work related injury or illness above a first aid) | |
| | • Any other factor which relates to the safety performance of a product, machine, process, organization, *etc.* | |

In operation, the calculation component 302 can employ these metrics (among others) to enable computation of a dynamic sustainability score for each product from either a unit and/or batch perspective. In other words, planet, people and profit factors can be quantified into a sustainability score or rating. The calculation component 302 can employ logic (*e*.*g*., computer-assisted algorithms, logic and formulae) to calculate an optimal result from certain metrics to establish the 'most sustainable' product or process for the end user.

The score established by the calculation component 302 could be an individual value, a combinatorial value, a multi-factorial value, or, optionally, a weighted value. By way of example, a weighting component 304 can be employed to individualize or personalize sustainability factors. For instance, a given individual may particularly care about a single value, such as an overall carbon impact, or emissions, for a given product. That value might be "3.3 metric tons."

Another user, however, might be more concerned about emissions as well as recycling practices. Use of recycling practices might be expressed as a 'true/false' value, such as "If a company uses recyclable packaging, the value = 1, if not, the value = 0." Yet other aspects can employ more granular factors such as, but not limited to, types of recyclables. Here, a particular individual might be more interested in a company that recycles plastic or glass. This same individual might not be as interested in, or sensitive to, recycling procedures related to paper products. Accordingly, the weighting component 304 can account for these individualized or personalized preferences by applying a higher or lower weight respectively.

Thus, in the aforementioned example, the sustainability score for the product might be: 3.3 metric tons + 0 recycling = Overall value of 3.3.

As described above, the weighting component 304 can individualize or personalize the sustainability score. In aspects, "weighted" values may be used, as described below. It is to be understood that, in the following example, the consumer's intent is to have the lowest environmental and social impact. Thus, he or she seeks the lowest sustainability score. The following table illustrates an example of a weighted score in accordance with an aspect.

| | Factor | Value or Range of values | Weight* |
|---|---|---|---|
| A | Safety performance: Recordable Case Rate (RCR) (lower is better) | 0-10 | 30 |
| B | Water use (gallons) | # of gallons | 20 |
| C | Packaging (Recyclable yes/no) | 1=yes, 0=no | 10 |

| | | | |
|---|---|---|---|
| *to adequately differentiate an importance factor, it can be common to use a wide range of values for weighted scales, such as 10, 20, 30, vs. 1, 2, 3. | | | |

In the example above, the consumer's primary concern is the safety performance of the company that made the product to be purchased. This primary concern is evinced by the high weighting factor of 30. Thus, in accordance with the table above, to determine their sustainability score the calculation could be:
"Find me a bottle of wine with a Sustainability Score of: 30*A+20*B+10*C"

All available bottles of wine could be presented to the consumer with the a algorithm:

| **Product** | **Safety (RCR)** | **Water Use (gallons)** | **Recyclable Packaging (1=yes, 0=no)** | **Sustainability Score** |
|---|---|---|---|---|
| Chardonnay: | 1.4 | 40 | 0 | =(30*1.4)+(20*40)+(10*0)=**842** |
| Chablis: | 3 | 20 | 1 | =(30*3)+(20*40)+(10*1)=**900** |

As the consumer is most interested in the lowest sustainability score, the consumer would choose the Chardonnay. Here, the weighted score would indicate that by balancing the factors of importance to the consumer, with safety performance of the employer being most important, the Chardonnay is the best choice.

However, another consumer, for example from a drought prone area, perhaps might find water usage to be of most importance. Thus, this other consumer may assign the sustainability factors different weights.

| | Factor | Value or Range of values | Weight* |
|---|---|---|---|
| A | Safety performance: Recordable Case Rate (RCR) (lower is better) | 0-10 | 10 |
| B | Water use (gallons) | # of gallons | 30 |
| C | Packaging (Recyclable yes/no) | 1=yes, 0=no | 20 |

As illustrated in the following table, this modified weighting would result in a different sustainability scoring, reflective of the consumer concerns.

| **Product** | **Safety (RCR)** | **Water Use (gallons)** | **Recyclable Packaging (1=yes, 0=no)** | **Sustainability Score** |
|---|---|---|---|---|
| Chardonnay: | 1.4 | 40 | 0 | =(10*1.4)+(30*40)+(20*0)=**1214** |
| Chablis: | 3 | 20 | 1 | =(10*3)+(30*20)+(20*1)=**650** |

Thus, for this consumer, the Chablis is the best choice.

As described *supra*, in application, the sustainability score could be used for decision making related to: supply chain management (*e*.*g*., raw material to finished good to 'reverse supply chain'), industrial production, consumer purchasing decisions, regulatory oversight, among others.

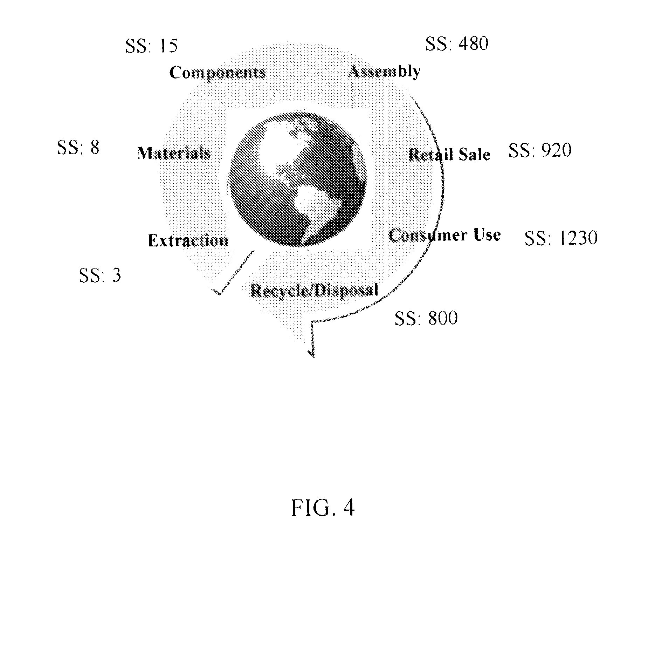

The dynamic sustainability score (DSS) could accompany materials through their entire lifecycle from extraction to disposal/recycling. In other aspects, the DSS could be applied as shown in FIG. 4 by adding up the cumulative sustainability impact of all steps completed, in a way that is optimally customizable according to consumer-defined, manufacturer/company/organization-defined, or governmentally-defined weighting of sustainability factors.

Following is an example of systems and methods capable of dynamically extracting resource consumption and usage information from an industrial environment. As described *supra*, this resource information can be used, along with other metrics, to establish a DSS as well as total lifecycle evaluation.

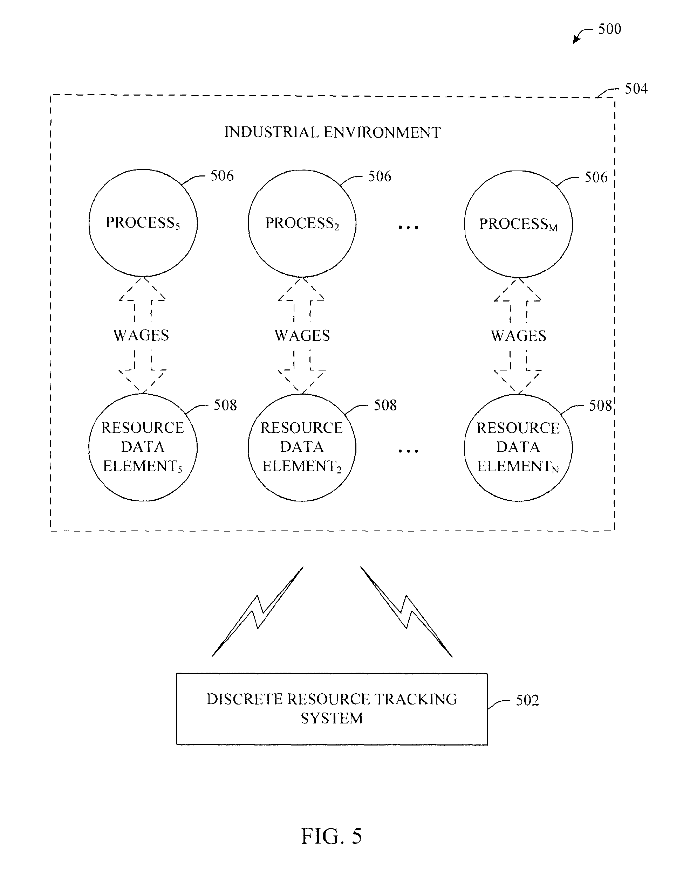

Referring now to the drawings, FIG. 5 illustrates a system 500 that facilitates discrete resource management and tracking in accordance with aspects of the specification. While the aspects described herein are directed to "resources," it is to be understood that a resource is intended to refer to both resource consumption and usage as well as emissions and/or effluents of such resources. By way of example and not limitation, energy sources can include water, air, gas, electric and steam. These example energy sources are referred to collectively in the specification and figures as "WAGES" which is an acronym for Water, Air, Gas, Electric and Steam. However, it is to be understood that the WAGES acronym is not intended to limit the types of energy sources contemplated by the specification. Rather, WAGES is intended to include energy, usage, emissions, effluents, *etc*. associated with resources used in connection with industrial environments. For instance, solar can also be considered an energy source that is to be considered within the scope of this disclosure and claims appended hereto.

Industrial resource consumption and usage can be impacted by at least two major variables, environmental changes and production output. Environmental changes (*e*.*g*., air temperature, humidity, time of day) on facilities' resource consumption and usage can be measured, trended, and controlled through energy tracking software and building automation systems. Conventionally, production output's granular impact on resource consumption and usage has generally been estimated and not measured. In contrast, the specification enables discrete data elements related to granular aspects of processes to be captured and stored. These discrete data elements can be employed to simulate, plan, forecast, react, *etc.*

It is to be understood that an industrial process is intended to include all processes that may be present within an industrial environment. For example, processes are to include batch, job and continuous processes. Additionally, process is not intended to be limited to process manufacturing. For instance, discrete manufacturing is also to be included within the scope of the definition of process defined and used herein. It is to be understood that these broad definitions are to be included within the scope of the specification and claims appended hereto.

Conventionally, there were no direct incentives on the plant floor to reduce resource consumption and usage because usage and associated energy could not be measured against production volumes. Rather, resource costs were merely considered fixed allocations, generally, allocated per month per square foot. By enabling discrete resource monitoring associated with processes, the specification enables manufactures to make better production decisions based on energy availability, real time pricing, and emission caps. Additionally, the specification describes an architecture that optimizes and manages resource consumption, usage and emissions and/or effluents as related not only to the facility infrastructure but also the granular processes on the production floor.

As described herein, conventional products and systems approach energy and emission management at a macro level, from the facility infrastructure, *e*.*g*., substations, switchgears, emission monitors. These conventional systems apply production related information against the overall facility resource data in an attempt to manually calculate or otherwise to infer energy performance. Other conventional products focus resource consumption, usage and emission/effluent management on a building management level, *e*.*g*., data centers, lighting, chiller and boilers.

In contrast, the specification provides a unique perspective of viewing resource consumption and usage from the production floor back to the facility infrastructure. In operation, the system 500 can include a discrete resource tracking system 502 that collects resource data on the plant floor. This resource data can be employed to enhance recipe optimization and regulatory requirements, among other purposes.

In particular, the specification can extract resource consumption and usage data from individual processes and sub-processes on the plant floor. This extracted data can include both a resource consumption/usage component as well as a descriptive component that defines contextual factors to better define the raw resource data. In aspects, the consumption data can be correlated to production output and stored for subsequent uses. For example, the data can be used to apply standard production modeling tools for production consumption, usage and emission/effluent forecasting and optimization. Additionally, the specification can extend conventional existing facility demand management systems to include production. Still further, the specification's discrete resource tracking functionality can link the system to Demand Response and Smart Grid (DRSG), Water Demand Management, as well as, Cap and Trade/Tax systems.

As shown in FIG. 5, an industrial environment 504 (*e*.*g*., production floor) can include 1 to M processes, where M is an integer. As used herein, a process can refer to most any portion of a manufacturing process and/or system. In one example, a process can be a mixing process and amount of product while, in another example, a process can refer to a mixer. Essentially, the specification enables a production floor within an industrial environment to be granularized such that most any portion of production can be measured and monitored with regard to resources used (and/or emissions and effluents discharged).

In a particular aspect, 1 to N resource data elements 508 can be captured as they relate to the processes, where N is an integer. As described *supra*, resource criteria related to WAGES can be captured as they relate to particular processes in a production or industrial environment. The discrete resource tracking system can capture these data elements 508, associate them to discrete processes, mark the data, for example with process specific tags, and finally store the data for subsequent use. Following is more detailed description of functionalities of the discrete resource tracking system 502.

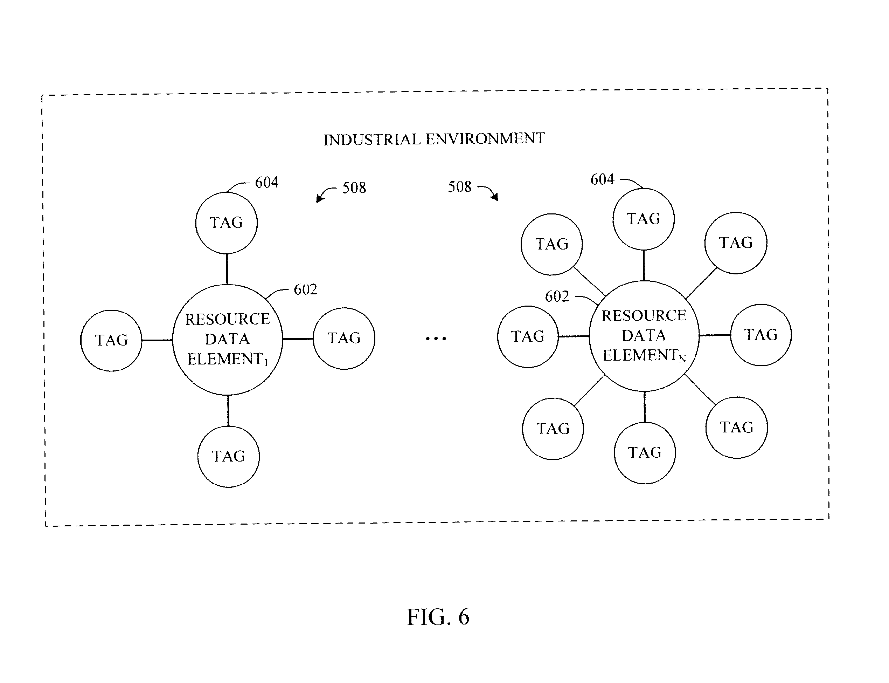

FIG. 6 illustrates an example of resource data elements 508 in accordance with aspects. As shown, the data elements 508 can include a quantified data element 602, for example, a number of kilowatts or gallons used in a process. Tags 604 can be applied to the data element to describe contextual criteria associated with the particular data element 602. For example, tags can describe a process, machine, quantity of product produced, environmental conditions (*e*.*g*., air temperature, humidity...), among other criteria. Essentially, most any information that relates to a process or industrial environment can be applied as a tag element 604. As described *supra*, resource is not intended to be limited to WAGES consumed or used but, also is intended to include emissions and/or effluents related to such consumption and usage as appropriate and/or desired.

It is to be understood and appreciated that the granularity of tags 604 embedded or otherwise associated to data elements 602 can be system or user defined as appropriate. For example, in one scenario, a data element 602 may only have a few tags that identify a process phase, time of day and day of week. In another example, the tags 604 might include a very specific sub-process identification, a number of widgets or amount of product produced in the sub-process, the time of day, day of week, identity of operators or factory workers, environmental conditions (*e*.*g*., ambient temperature, humidity...), *etc.* In other words, the specification contemplates use of most any number of tags or descriptive information markers.

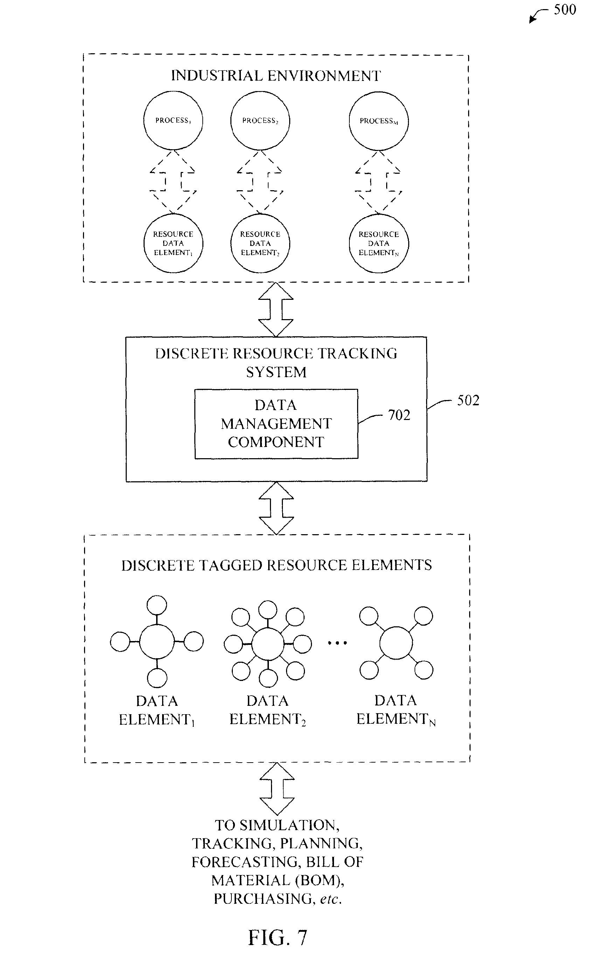

Referring now to FIG. 7, an alternative block diagram of an example system 500 is shown in accordance with aspects. Essentially, FIG. 7 illustrates that the discrete resource tracking system 502 can include a data management component 702 that facilitates collection, marking and storage of discrete resource elements. Operation of the data management component 702 will be described in more detail in connection with the figures that follow.

As shown in FIG. 7, the discrete resource tracking system 502 can effectively monitor an industrial environment, for example, at a factory floor granular level. In other words, individual processes and sub-processes can be monitored with respect to resource consumption, usage, waste flow and/or emissions and/or effluents. In aspects, raw energy quantities can be collected as related to particular processes. Additionally, the data management component 702 is capable of tagging or otherwise marking the raw energy measurement data. For instance, contextual criteria including, but not limited to, power quality factors, environmental conditions, number of widgets or products produce in a corresponding elapsed timeframe, etc. can be collected and associated to the raw data elements.

As illustrated, these discrete resource elements can be used for a variety of purposes ranging from forecasting to troubleshooting. In aspects, the data can be used for simulation and/or planning of factory processes. These simulation scenarios can be employed to optimize or enhance efficiency of factory operations. In other aspects, the data can be applied to a bill of material (BOM) related to a factory or manufacturing process. Here, the energy line item within a BOM can be considered in decisions to enhance or optimize factory process or workflow. Additionally, inclusion of resource data within the BOM will enable companies to more effectively and accurately forecast costs associated with manufacturing or other industrial processes.

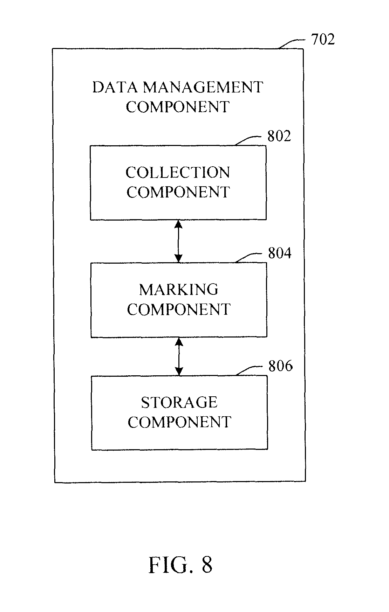

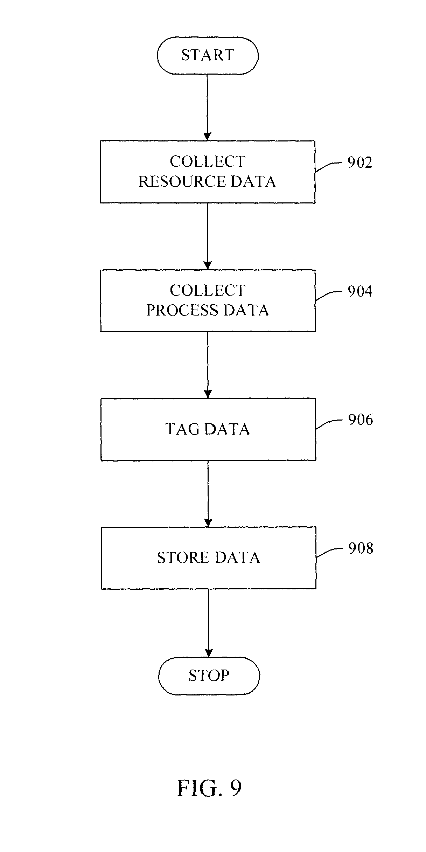

Turning now to FIG. 8, an example block diagram of a data management component 702 is shown in accordance with aspects. As illustrated, the data management component 702 can include a collection component 802, a marking component 804 and a storage component 806. While three sub-components (802, 804, 806) are shown, it is to be understood that aspects can employ any subset of the components and corresponding functionality. For instance, if discrete and granular raw resource data is all that is desired, aspects can be employed without specific marking or tagging functionality of the marking component 804. Similarly, if real-time (or near real-time) analysis of data is employed, aspects may be employed without a storage component 806. The functionality of each of these sub-components will be better described upon a review of the methodologies of FIGS. 9 thru 12 that follow.

FIG. 9 illustrates a methodology of capturing discrete resource data in accordance with an aspect of the specification. While, for purposes of simplicity of explanation, the one or more methodologies shown herein, *e*.*g*., in the form of a flow chart, are shown and described as a series of acts, it is to be understood and appreciated that the subject specification is not limited by the order of acts, as some acts may, in accordance with the specification, occur in a different order and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the specification.

At 902, resource data is collected, for example, raw energy flow data is collected from a process or sub-process upon an industrial floor. Similarly, at 904, data related to the process is collected. Here, for example, data that quantifies product associated to the energy consumed can be captured. Additionally, environmental and other contextual data can be captured to enhance meaningfulness of the resource data, *e*.*g*., in simulation, planning, forecasting or other scenarios. With reference again to FIG. 8, the collection sub-component 802 can be employed to collect or otherwise obtain this information. In operation, the collection component 802 can include or otherwise communicate with a variety of sensors, detectors or monitors capable of capturing the raw resource data together with the descriptive and energy-related information.

At 906, the data can be tagged, for example, date-stamped. Additionally, other captured data can be applied, embedded or associated in a tagging or marking manner. For instance, identification of associated process(es), environmental factors, contextual factors, or the like can be used to tag the data. In operation, a marking component (*e*.*g*., 804 of FIG. 8) can be used to tag the data. It is to be understood that, in addition to information, tags can also include links to log reports, graphs, or the like that can be used to enhance optimization of energy management at a discretized level.

If desired, the data can be stored at 908. In examples, the data can be locally stored (*e*.*g*., at a machine, sensor or device associated with a process). In other aspects, the data can be remotely stored, for example in a server, distributed network of stores, or cloud-based store. As described *supra*, this information can be employed to simulate, plan, forecast, reduce carbon-foot-prints, manage or reduce emissions and/or effluents as well as to make other decisions, such as power management and revenue decisions.

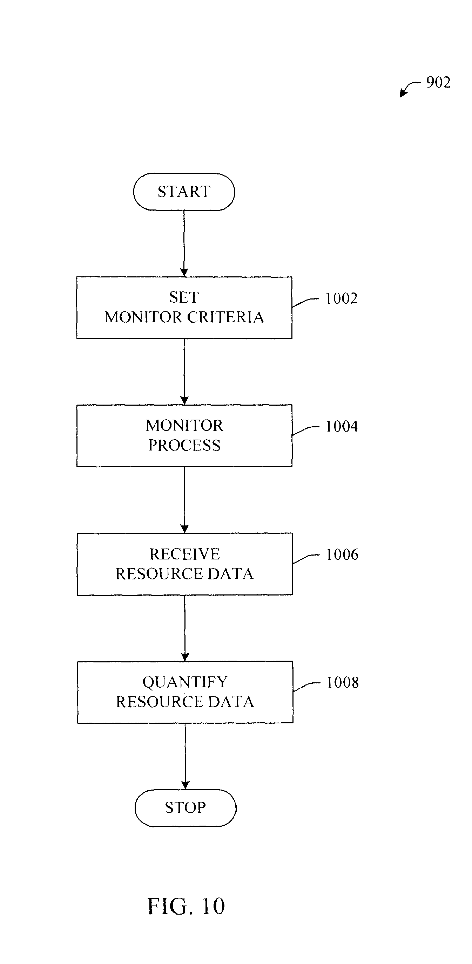

FIG. 10 is an example flowchart of collecting resource data (902 of FIG. 9). As shown, monitor criteria can be set at 1002. For example, criteria can be based upon production schedules, individual processes (*e*.*g*., discrete or batch), environmental conditions, process locations, *etc.* At 1004, process(es) can be monitored with respect to resource consumption and usage (and/or emissions and/or effluents). At 1006, individual resource quantities can be captured as they relate to a defined process. For instance, the amount of electricity used to operate a machine can be captured and later related to a particular production value.

In other words, at 1008, the resource data can be quantified as it relates to the process being monitored. In aspects, the raw data can be converted to appropriate units. Additionally, the raw data can be quantified as a function of process operations. For instance, X widgets were produced in the time that Y amount of energy was used. As will be understood, this granular measurement enables sophisticated analysis and understanding of costs expended in an industrial environment.

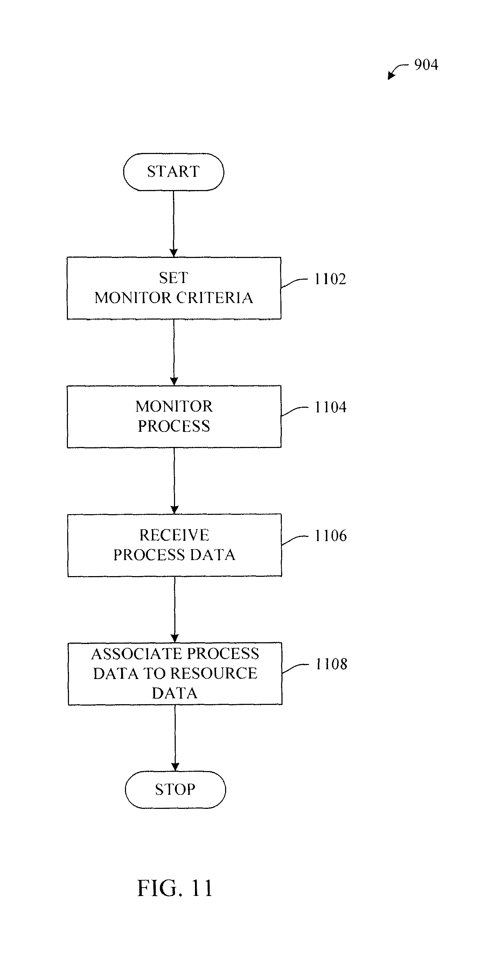

Turning now to FIG. 11, an example flowchart of collecting process data (904 of FIG. 9) in accordance with aspects is shown. As described with regard to FIG. 11, monitor criteria can be set at 1102. Here, for example, the system can be set to trigger monitoring of environmental factors upon an ambient temperature reaching a specified level. As will be understood, countless examples of triggering events as well as types or criteria of data that can be collected exist. All of these alternative examples are to be included within the spirit and scope of the specification described and claimed herein. Once criteria is set (or otherwise determined), the process (or sub-process(es)) can be monitored at 1104.

As monitoring is on-going, process data can be received at 1106. Accordingly, as mentioned above, the process data can be associated to captured resource consumption and usage (and/or emissions and/or effluents) data. For instance, WAGES data can be captured, quantified and related to process criteria in order to establish a comprehensive understanding of industrial environment costs. In particular aspects, resource data can be included upon a BOM to better assist organizations in quantifying overhead and costs associated at the factory floor.

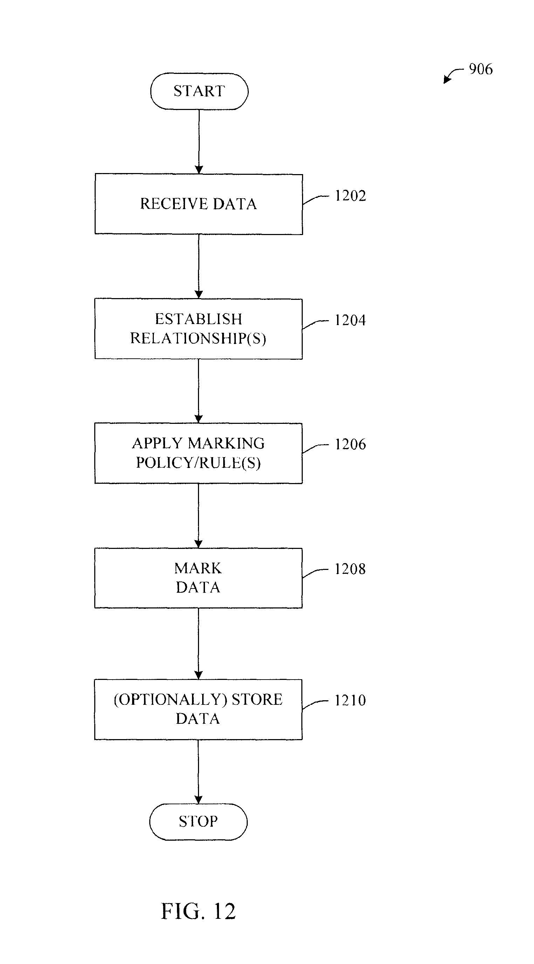

Finally, at 1108, this process data can be associated to resource data collected. In operation, the resource data can effectively be quantified as a function of production. As will be understood, this association enables an energy component in a BOM to be factored into decision making processes as well as revenue (and/or cost) calculations). FIG. 12 that follows describes a mechanism by which the raw resource data can be tagged or marked with descriptive data.

Referring now to FIG. 12, an example flow diagram of a methodology of marking (or tagging) data in accordance with aspects of the specification is shown. At 1202, data is received - for example, process-related resource data together with data that describes the process and environment is received. Relationships between the data are established at 1204. Here, the resource data can be related or otherwise associated to the descriptive data.

Marking rules can be accessed at 1206. For example, rules can include identification of what information should be used for tagging, how to tag, when to tag, *etc*. Accordingly, at 1208, the resource data can be marked with the process-related or descriptive data. As illustrated in FIG. 2, the number of tags can vary based upon most any factor including, but not limited to, relevance, type of process, type of resource, preference, regulation, *etc*. Optionally, at 1210, the tagged data can be stored, for example, in a local store (*e*.*g*., within a sensor, server, network), remote store, distributed source, cloud-based store, or combinations thereof.

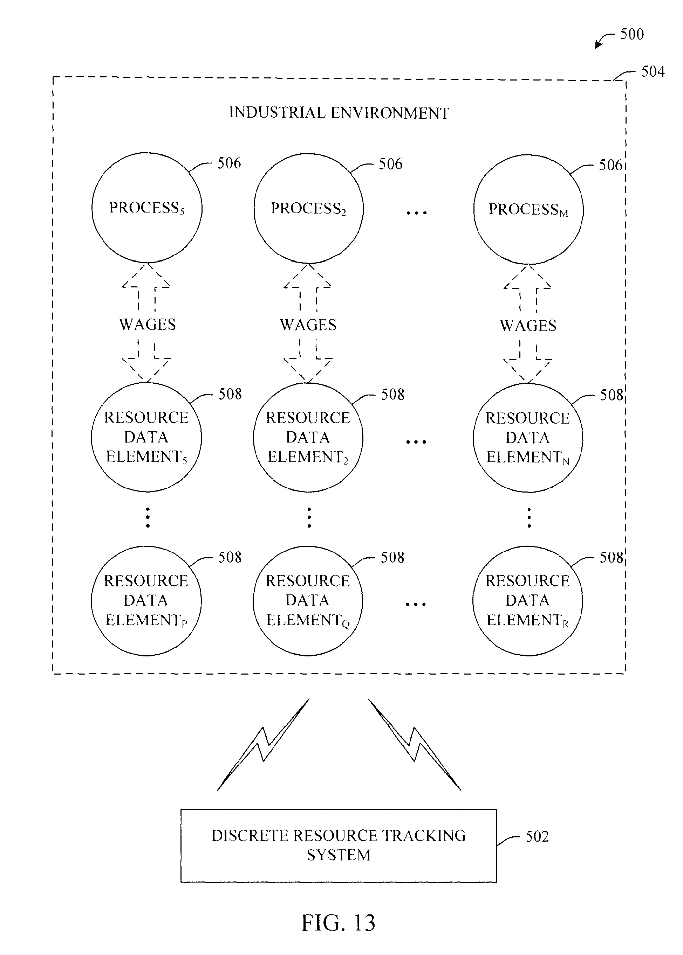

Turning now to FIG. 13, an alternative example block diagram of system 500 is shown in accordance with aspects. Essentially, FIG. 13 illustrates that multiple resource data elements 508 can be collected from the 1 to M processes, where M is an integer. In particular, as shown, 1 to P, 1 to Q, and 1 to R elements can be collected from processes 1, 2 and N respectively, where P, Q and R are integers. Overall, it is to be understood that most any granularity as desired may be employed in aspects. It is further to be understood that many processes within an industrial environment can utilize a variety of resource components (*e*.*g*., WAGES). Thus, it is to be appreciated that the specification enables discrete tracking of each of the resource (*e*.*g*., energy) components independently as they relate to processes within an industrial environment.

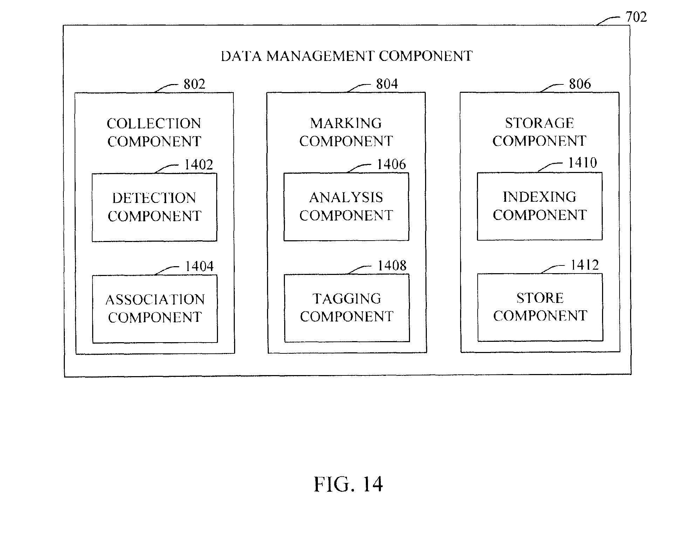

Referring now to FIG. 14, an example block diagram of data management component 702 in accordance with aspects of the specification. As illustrated, the collection component 802 can include a detection component 1402 and an association component 1404. Together, these sub-components (1402, 1404) can capture both resource data as well as descriptive data (*e*.*g*., process data, environment data, contextual data).

The detection component 1402 can employ or otherwise include a plurality of detectors or sensors configured to monitor processes within an industrial environment. It is to be understood that most any detector or sensor capable of capturing data can be employed in connection with aspects. For example, sensors manufactured by Rockwell Automation such as the Power Monitor 1000-brand sensor can be employed to collect power data in accordance with aspects of the specification. The association component 1404 is configured to associate resource data to process criteria. By way of example, the association component 1404 can establish that X amount of energy is used to manufacture Y number of widgets. It is to be understood that this is just one of countless examples of relating resource consumption/usage to processes (or sub-processes) in an industrial environment.

Turning attention now to the marking component 804, an analysis component 1406 and a tagging component 1408 can be employed to effect marking of resource data. In operation, the analysis component 1406 can evaluate the associations (*e*.*g*., from association component 1404) to thereafter facilitate marking by the tagging component 5008. As shown in FIG. 6, a resource data element can include most any number of tags as appropriate or desired. These tags enable applications and third party providers to manipulate or use the data in simulation, planning, forecasting, *etc*.

As described above, the tagged data can be stored for subsequent access or use, for example, by an application or third party service. The storage component can include an indexing component 1410 that establishes an index that enhances access to data within a store 1412 such as a local store, remote store, distributed source, cloud, *etc.*

As described *supra*, a useful application of the specification is the ability to quantify resource consumption/usage (*e*.*g*., water, air, electricity) for use as a BOM item in industrial environments. Every day manufacturers make scheduling decisions based on availability of materials and high cost of labor. As resource prices rise, it is helpful to include these factors into these scheduling decisions. Today, wrong or inefficient scheduling choices are costing producers tens, if not hundreds, of thousands of dollars in demand penalties and tariffs. Unfortunately, many manufacturers are not aware of these penalties and tariffs.

In accordance with the specification, many automated production lines can monitor some level of energy and/or water usage for startup profiles, maintaining recipe optimization, or for regulatory compliance. Manufacturers could, by applying discrete monitoring techniques, have the ability to make scheduling, forecasting and optimizing choices against resource demands through the use of standard production simulation tools. They could manipulate schedules to move orders that consume large amounts of energy to off peak pricing (*e*.*g*., load leveling). Also, in areas where energy has been deregulated, manufactures will be able to make wiser choices based on manufacturing schedules.

As described above, resource monitoring on the production floor tied to a resource tracking software packages can correlate production output to the resources consumed. For example, energy could be metered and the empirical results could be added to the production BOM. It is to be understood that this allows the use of standard production simulation and forecasting tools, as well as, lean six sigma tools to enhance or optimize production against additional variables such as energy, rate schedules, and emissions and/or effluents.

In aspects, the specification facilitates production demand management. The typical electrical utility bill has a component for consumption, kilowatt-hours, and demand, average power over a pre-defined interval. The consumption charge is computed by multiplying the consumption amount by the applicable rate per kW-H. The rate can be constant or it can change based on the time of day, day of week, season, or current rate available in a de-regulated market.

A user can achieve consumption cost saving by improving the efficiency of the system and by shifting usage into a time period with a lower rate per kW-H. Demand charge calculation methods vary from utility to utility, but they are almost all based on measuring the average power over an interval, typically 15 or 30 minutes. In some instances a utility provides a signal to indicate the end/start of a discrete interval, and in some instances the interval is a continuously rolling window. The maximum recorded demand is then used to set the demand charge.

The charge may apply only for the month in which it was incurred, or it could apply for considerably longer, perhaps the next 12 months. Controlling demand charges is a more complicated process. It involves setting a peak demand limit that the user desires to stay below. The actual demand must then be continuously measured in real-time. The measured demand is used to project what the average power will be at the end of the time interval. If the projected demand equals or exceeds the user defined peak demand limit, action is required. The action could be as simple as manually turning off one or more loads until the next interval begins, or it could involve an automated process.

An automated process is usually chosen since it can continuously monitor the situation and react quickly without intervention. The process usually involves identifying various loads that can be shut down for a short time and prioritizing them. The automated system will then shed loads starting with the lowest priority load until the projected demand is below the limit. Once a new interval begins, the automated system can re-apply the loads, typically in reverse order, to allow normal system operation. In an industrial facility the production equipment is usually not considered a shed-able load since this would disrupt the manufacturing process. Most often selected loads involve thermal storage such as HVAC or refrigeration, energy storage such as air compressors, or lighting loads.

This strategy can successfully reduce a facility's electric bill, but it does not go far enough. The approach assumes that the supply of electricity is unlimited up to the capacity of the connected electrical distribution equipment and it does nothing to help optimize the cost per unit for the products being produced. As described herein, to improve this method, additional metering of the system can be used. The additional metering provides enough granularities for the user to measure the energy used by various elements within a process or manufacturing system under a variety of operating conditions.

With this information and the applicable utility rate structure, the user can now construct a more complete breakdown of the true cost per unit for the output of the facility. It is now possible to construct a mathematical model that includes cost of raw materials, amortization of capital equipment, floor space, labor, prioritized production requirements, and energy. The output of the model allows control choices to be made that manage output requirements and energy (and/or water usage) while also optimizing the economic return to the company.

The availability of the resource (*e*.*g*., energy) requirement profile for various components of the manufacturing line or process also enables an enhancement to the control process. As stated above, the typical method for controlling energy costs is simply turning on or off various portions of a facility. However, in many cases there is another alternative that may be more desirable. Instead of viewing the controllable elements as being either on or off, they can be controlled to operate along the continuum between those two states. In other words, the production line or process can be "modulated" based on the mathematical model.

A simple example will illustrate the concept. Suppose the facility produces a product that must be heated in an oven for a specific amount of time in order to cure or cook it. In previous systems, when the cost or availability of energy was not a significant concern, the system would be designed to produce the most finished product possible in the least amount of time while maintaining acceptable quality. This usually provided the best return for the cost expended. In the current higher cost of energy environment this may no longer be true. It may now be a better economic decision to reduce the temperature in the oven and increase the time when the cost of energy is higher. This modulation of the system produces fewer products per unit of time. However, if properly driven by the mathematical model the return on investment can be maximized.

What has been described above includes examples of the specification. It is, of course, not possible to describe every conceivable combination of components or methodologies for purposes of describing the subject specification, but one of ordinary skill in the art may recognize that many further combinations and permutations of the specification are possible. Accordingly, the specification is intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.
Embodiment 1: A system that facilitates sustainability factor scoring, comprising:
   a collection component that gathers a plurality of sustainability factors associated with an industrial environment; and
   a score generation component that establishes a dynamic sustainability score based at least in part upon a subset of the plurality of sustainability factors.
Embodiment 2: The system of embodiment 1, wherein the plurality of sustainability factors are at least one of factors related to planet, people or profit.
Embodiment 3: The system of embodiment 1, further comprising a calculation component that computes the dynamic sustainability score based at least in part upon the subset of the plurality of sustainability factors.
Embodiment 4: The system of embodiment 3, wherein the dynamic sustainability score is at least one of an individual value, a combinatorial value, a multi-factorial value, or a weighted value.
Embodiment 5: The system of embodiment 1, further comprising a weighting component that facilitates consideration of at least one weighting factor in computation of the dynamic sustainability score.
Embodiment 6: The system of embodiment 1, wherein the at least one weighting factor is user defined.
Embodiment 7: The system of embodiment 1, wherein the at least one weighting factor is a regulatory factor.
Embodiment 8: The system of embodiment 1, further comprising a calculation component that facilitates computation of a lifecycle dynamic sustainability score, wherein the lifecycle sustainability score is an aggregation of a plurality of dynamic sustainability scores associated with a product lifecycle.
Embodiment 9: The system of embodiment 8, wherein the product lifecycle includes a plurality of lifecycle phases.
Embodiment 10: The system of embodiment 9, wherein the plurality of lifecycle phases includes extraction, material, components, assembly, sale, consumer use, recycle or disposal.
Embodiment 11: The system of embodiment 1, wherein the dynamic sustainability score is associated with a product from at least one of a unit or batch perspective.
Embodiment 12: The system of embodiment 1, further comprising a storage component that facilitates retaining the dynamic sustainability score.
Embodiment 13: The system of embodiment 12, wherein the storage is located in at least one of a local, remote, distributed or cloud-based store.
Embodiment 14: A computer-implemented method for dynamic sustainability scoring of an industrial environment, comprising:
   employing a processor that executes computer executable instructions stored on a computer readable storage medium to implement the following acts:
   collecting a plurality of sustainability factor data elements; and
   establishing a dynamic sustainability score based at least in part upon a subset of the sustainability factor data elements, wherein the dynamic sustainability score is at least one of an individual value, a combinatorial value, a multi-factorial value, or a weighted value.
Embodiment 15: The computer-implemented method of embodiment 14, further comprising calculating the dynamic sustainability score based upon a computer-executable algorithm.
Embodiment 16: The computer-implemented method of embodiment 14, further comprising weighting the dynamic sustainability score based at least in part upon a policy, preference or regulatory factor.
Embodiment 17: The computer-implemented method of embodiment 14, wherein the plurality of sustainability factor data elements are at least two of planet-related, people-related or profit-related elements.
Embodiment 18: The computer-implement method of embodiment 14, further comprising establishing a lifecycle dynamic sustainability score that represents a sustainability score in each phase of a product or process cycle.
Embodiment 19: A computer-executable system, comprising:
   means for collecting a plurality of sustainability factors related to a product or process within an industrial environment; and
   means for calculating a dynamic sustainability rating as a function of a subset of the plurality of sustainability factors, wherein the sustainability rating is one of an individual value, a combinatorial value, a multi-factorial value, or a weighted value.
Embodiment 20: The computer-executable system of embodiment 19, further comprising means for weighting a subset of the sustainability factors based upon a policy or preference.

## Claims

1. A system that facilitates sustainability factor scoring, comprising:
a collection component that gathers a plurality of sustainability factors associated with an industrial environment; and
a score generation component that establishes a dynamic sustainability score based at least in part upon a subset of the plurality of sustainability factors.

2. The system of claim 1, wherein the plurality of sustainability factors are at least one of factors related to planet, people or profit.

3. The system of claim 1, further comprising a calculation component that computes the dynamic sustainability score based at least in part upon the subset of the plurality of sustainability factors.

4. The system of claim 3, wherein the dynamic sustainability score is at least one of an individual value, a combinatorial value, a multi-factorial value, or a weighted value.

5. The system of claim 1, further comprising a weighting component that facilitates consideration of at least one weighting factor in computation of the dynamic sustainability score.

6. The system of claim 1, wherein the at least one weighting factor is user defined.

7. The system of claim 1, wherein the at least one weighting factor is a regulatory factor.

8. The system of claim 1, further comprising a calculation component that facilitates computation of a lifecycle dynamic sustainability score, wherein the lifecycle sustainability score is an aggregation of a plurality of dynamic sustainability scores associated with a product lifecycle.

9. The system of claim 8, wherein the product lifecycle includes a plurality of lifecycle phases, and/or
wherein the plurality of lifecycle phases includes extraction, material, components, assembly, sale, consumer use, recycle or disposal.

10. The system of claim 1, wherein the dynamic sustainability score is associated with a product from at least one of a unit or batch perspective.

11. The system of claim 1, further comprising a storage component that facilitates retaining the dynamic sustainability score, and/or
wherein the storage is located in at least one of a local, remote, distributed or cloud-based store.

12. A computer-implemented method for dynamic sustainability scoring of an industrial environment, comprising:
employing a processor that executes computer executable instructions stored on a computer readable storage medium to implement the following acts:
collecting a plurality of sustainability factor data elements; and
establishing a dynamic sustainability score based at least in part upon a subset of the sustainability factor data elements, wherein the dynamic sustainability score is at least one of an individual value, a combinatorial value, a multi-factorial value, or a weighted value.

13. The computer-implemented method of claim 12, further comprising calculating the dynamic sustainability score based upon a computer-executable algorithm, or
further comprising weighting the dynamic sustainability score based at least in part upon a policy, preference or regulatory factor, or
wherein the plurality of sustainability factor data elements are at least two of planet-related, people-related or profit-related elements, or
further comprising establishing a lifecycle dynamic sustainability score that represents a sustainability score in each phase of a product or process cycle.

14. A computer-executable system, comprising:
means for collecting a plurality of sustainability factors related to a product or process within an industrial environment; and
means for calculating a dynamic sustainability rating as a function of a subset of the plurality of sustainability factors, wherein the sustainability rating is one of an individual value, a combinatorial value, a multi-factorial value, or a weighted value.

15. The computer-executable system of claim 14, further comprising means for weighting a subset of the sustainability factors based upon a policy or preference.
